# EUROPEAN PATENT SPECIFICATION

(11) **EP 3 543 990 B1**
(45) Date of publication and mention of the grant of the patent: **06.08.2025**
(21) Application number: 19163750.3
(22) Date of filing: 19.03.2019
(51) Int. Cl.: G09F 19/18, A47L 15/42, D06F 34/32, F24C 7/08, F25D 29/00, G09F 23/00, D06F 37/42, D06F 39/14, D06F 103/00, D06F 105/58, D06F 105/60

(54) **HOUSEHOLD APPLIANCE WITH USER INTERFACE**
HAUSHALTSGERÄT MIT NUTZEREINGABEVORRICHTUNG
APAREIL DOMESTIQUE AVEC INTERFACE UTILISATEUR

(30) Priority: 19.03.2018 IT 201800003722
(43) Date of publication of application: 25.09.2019
(73) Proprietor: Candy S.p.A., 20861 Brugherio, Monza e Brianza (IT)
(72) Inventor: FUMAGALLI, Aldo, 20861 Brugherio, Monza e Brianza (IT)
(74) Representative: Leihkauf, Steffen Falk

(56) References cited:
- EP-A1- 1 814 003
- EP-A1- 2 988 647
- EP-A1- 3 124 688
- WO-A1-2017/122256
- CN-A- 107 545 569
- DE-A1- 10 237 316
- DE-A1- 102004 036 212
- DE-A1- 102012 103 684
- JP-A- 2009 279 082
- JP-A- 2011 250 848
- JP-B2- 3 963 248
- US-A1- 2009 235 465
- US-A1- 2012 327 201
- US-A1- 2016 191 877

## Description

The present invention relates to a household appliance with a user interface for visualizing control information and for inputting commands for controlling the operation of the household appliance.

In general terms, the household appliances to which the invention relates comprise:
- a housing which delimits a treatment seat adapted to receive and/or to support one or more household products (linen, crockery, food products, furniture surfaces, fabrics) in a treatment position to subject them to a desired treatment;
- one or more treatment devices arranged inside the housing which can be actuated to perform one or more specific treatments in the treatment position;
- one or more treatment detector devices arranged inside the housing and configured to detect one or more values of the treatment parameters of the treatment to which the domestic product is subjected in the treatment position,
- optionally, one or more anomaly detectors arranged inside the housing and configured to detect one or more operating anomalies of the household appliance,
- an electronic control system arranged in the housing and in signal connection with the treatment device and with the treatment detector and configured to control the treatment device in dependency of a treatment program and in dependency of the values detected by the treatment detector,
- a user interface in signal connection with the electronic control system to allow the user to select (parameters of) a treatment program of the domestic product and for visualizing parameters of the selected and/or running treatment program.

In the household appliances of the prior art, the user interface is formed in one or more fixed positions of the housing or of the treatment seat (refrigerator) and comprises one or more buttons or knobs or capacitive touch sensors and, possibly, visual indicators, e.g. warning lights or a liquid crystal display (TFT) or OLED. US2012327201A1 describes a washing machine, wherein a user interface is projected onto the surface of the washing machine. EP1814003A1 describes a household appliance with a projection device.
DE102012103684A1 describes a display device for use in an oven. EP3124688A1 describes a laundry dryer. DE10237316A1 describes a household provided with a projection screen. DE102004036212A1 describes a household appliance having a display unit with a projection unit. US2016191877A1 describes a projection device and a projection method. EP2988647A1 describes a dishwashing machine comprising an optical display.

The user interfaces of the household appliances of the prior art were satisfactory at a time in which the development of strategies and treatment parameters, OSDs, communication data and electronic control went hand in hand with the development of processing apparatuses, with the evolution of the design of the household appliance housings and with the average lifetime of the appliances.

In the current state, the domestic product treatment strategies, the electronic control and data communication technology, the amount of treatment data and parameters available and potentially usable for controlling household appliances and the aesthetic design of the household appliance housings are rapidly evolving and frequently, one either conflicts or "lags behind" the other.

A reason for dissatisfaction of known household appliances is the impossibility of providing user interfaces that are sufficiently large and extended to display large amounts of treatment control information, without spatial interference with other components of the household appliance.

A further reason for dissatisfaction with known household appliances is the conflict between the need for flat and extended housing surfaces to position a liquid crystal display (TFT) or OLED and the desire for an innovative design of the appliance with curved surfaces and with freely definable colors and surface structures.

A further reason for dissatisfaction with known household appliances is the conflict between the need to have very large openings and access doors or hatches, the relatively small outer dimensions being the same, in order to facilitate the loading of the household products in the household appliance and the need to provide, often on the same front walls of the appliance, free spaces for installing the user interface.

A further reason for dissatisfaction with known household appliances is that, today, a specific concept of user interface must be designed in close connection with a specific project of the household appliance and its exterior design, making it difficult to transfer a new concept of user interface to a preexisting household appliance, the exterior design of which one wishes to keep or to another type of household appliance having a different external shape.

Thus, it is the object of the present invention to provide a household appliance with a user interface having features such as to avoid at least some of the drawbacks of the prior art.

It is a further object of the invention to provide an appliance with a user interface having features such as to be easily adaptable to household appliances with non-continuous surfaces, e.g. in the presence of moving parts (hatch, door, detergent drawer) and/or non-planar parts, and which can be easily applied and transferred between housings with different aesthetic design, versatile with reference to display size, to the information to be visualized and to the input commands to be allowed.

These and other objects are achieved by a household appliance with a user interface according to claim 1. The dependent claims relate to advantageous and preferred embodiments.

According to an aspect of the invention, the display means of the user interface comprise at least one video projector mounted onto the household appliance at its outer wall and configured to visualize, by means of a light projecting process onto a display area of the outer surface of the housing.

The visualization by means of light projection allows to make user interfaces with a display field that is sufficiently large and extended for visualizing a large amount of treatment control information, without any spatial interference with the various components which form the outer surface of the household appliance.

Visualizing by means of light projection also allows a visualization on interrupted surfaces or on surfaces consisting of areas of different structure and/or color, as well as on non-planar surfaces and thus allows an innovative aesthetic design of the household appliance with curved surfaces and with freely definable colors and surface structures.

Visualizing by means of light projection also allows very large openings and access doors or hatches in order to facilitate the loading of the domestic products to be treated, without any need to provide additional spaces devoted exclusively to visualization only, the visualization being possible, at least in part, on the same access doors (e.g. in the case of an oven, a refrigerator or a laundry or dish washing/drying machine) or even on the treatment seat (e.g. in the case of a cook top or an ironing board) if the latter forms part of the outer surface of the housing.

The video projector can be at least partially concealed by the housing and its dimensions do not depend on the size or direction of the performed light projection. This facilitates the transfer of a user interface concept between household appliances with different exterior designs.

According to a further aspect of the invention, the user command insertion means comprise at least one command input sensor adapted to detect a positioning and optionally a movement of the user's hand at the display area, and the electronic control system comprises association means which:
- associate the detected hand position and optionally movement with command input fields visualized by means of the video projector (e.g. buttons, knobs, virtual sliders) in the display area, and
- generate corresponding command input signal.

The electronic control system is configured to set the treatment program parameters in dependency of the generated command input signals.

Further advantageous aspects of the invention will be apparent from the following description of some embodiments provided by way of non-limiting example with reference to the accompanying figures, in which:
- figures 1 - 5 are perspective views of a washing machine according to an embodiment of the invention,

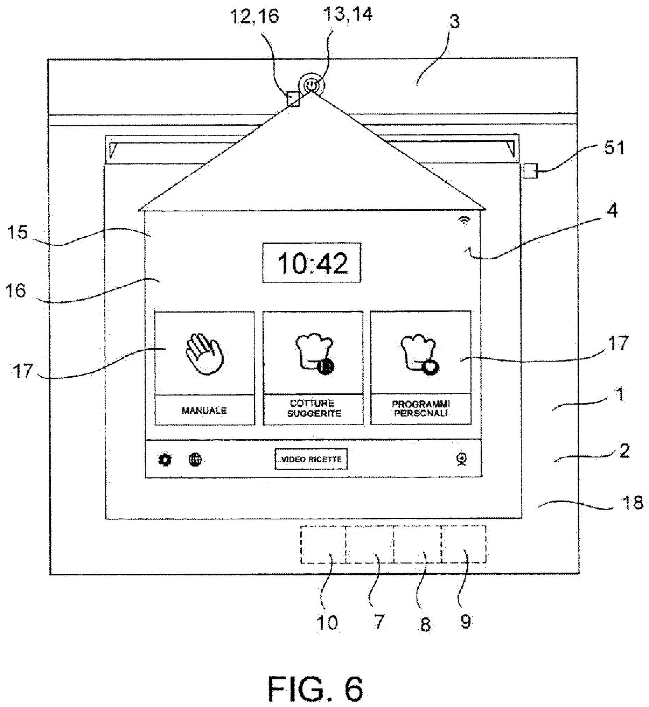

- figure 6 is a front view of a cooking oven according to an embodiment of the invention,

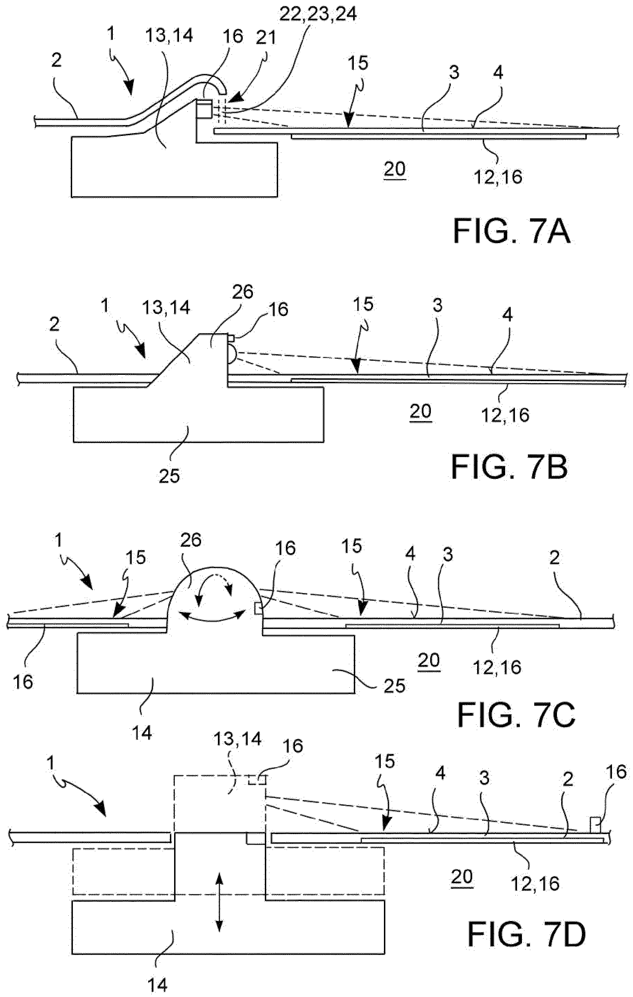

- figures 7a, 7b, 7c, 7d are diagrammatic section views of a detail of the user interface of the household appliance according to embodiments,

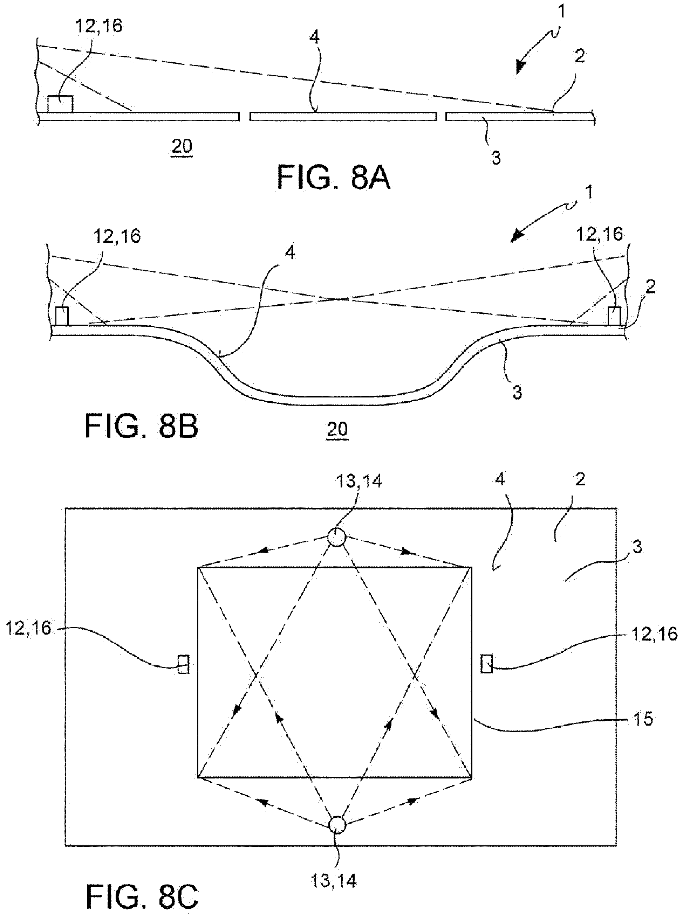

- figures 8a, 8b are section views of a detail of the housing of the household appliance at a display area according to embodiments,
- figure 8c is a front view of a detail of the housing of the household appliance at a display area according to an embodiment,
- figure 9 is a diagrammatic view of a washing machine according to an embodiment;
- figure 10 is a diagrammatic view of a tumble dryer according to a further embodiment of the invention,
- figure 11 is a diagrammatic view of a washing and drying machine according to a further embodiment of the invention;
- figure 12 is a diagrammatic view of a dishwasher according to an embodiment;
- figure 13 is a diagrammatic view of a domestic cooking oven according to an embodiment,
- figure 14 is a diagrammatic view of the functional groups of a domestic microwave oven according to an embodiment.
- figure 15 is a diagrammatic view of the functional groups of an electric or induction cook top according to an embodiment,
- figure 16 is a diagrammatic view of the functional groups of a gas cook top according to an embodiment,
- figure 17 is a diagrammatic view of the functional groups of a refrigerator according to an embodiment,
- figure 18 is a diagrammatic view of the functional groups of a freezer according to an embodiment,
- figure 19 is a diagrammatic view of the functional groups of a vacuum cleaner according to an embodiment,
- figure 20 is a diagrammatic view of the functional groups of an ironing system according to an embodiment.

With reference to the figures, a household appliance 1 comprises:
- a housing 2 with an outer wall 3 forming an outer surface 4 of the household appliance 1,
- a treatment seat 5 adapted to receive and/or support domestic products in a treatment position 6,
- at least one treatment device 7 arranged inside the housing 2 which can be operated to perform a treatment at the treatment position 6 and subjecting the domestic product to said treatment,
- at least one treatment detector 8 arranged at least partially inside the housing 2 and configured to detect a value of a treatment parameter of the treatment performed by the treatment device 7,
- optionally, at least one anomaly detector 9 arranged at least partially inside the housing 2 and configured to detect a value indicative of an operating anomaly of the household appliance 1,
- an electronic control system 10 arranged in the housing 2 and in signal connection with the treatment device 7 and with the treatment detector 8 and configured to command the treatment device 7 in dependency of a treatment program and in dependency of the value detected by the treatment detector 8,
- a user interface 11 in signal connection with the electronic control system 10, said user interface 11 comprising:
   - command insertion means 12 for inputting commands (by a user) for selecting parameters of the treatment program and for inputting a command for executing the treatment program, and
   - display means 13 which visualize the selectable parameters of the treatment program and/or visualize treatment parameters during the execution of the treatment program.

According to an aspect of the invention, the display means 13 comprise at least one video projector 14 mounted onto the household appliance 1 at the outer wall 3 and configured to visualize, by means of a light projecting process onto a display area 15 of the outer surface 4 of the housing 2.

According to a further aspect of the invention, the user command insertion means 12 comprise at least one command input sensor 16 adapted to detect a positioning and optionally a movement of the user's hand at the display area 15, and generate a corresponding hand position and optionally movement signal. The electronic control system 10 comprises an interpretation and association module which receives and processes the hand position and optionally movement signal and generates a user command signal in dependency of which the electronic control system 10 sets the treatment program parameters and controls the display, by means of the video projector 14.

### Detailed description of the display area 15 of the outer surface 4

According to an embodiment, in the areas of the outer surface 4 provided to implement the visualization by projecting of light, the outer surface 4 is colored and treated so as to have a higher light reflectivity with respect to an area which is not intended for visualization.

According to a further embodiment, in the display area 15, the outer surface 4 may be either continuous or discontinuous, e.g. formed by parts of the appliance 1 connected to one another without mutual continuity of the outer surface and/or moving parts.

According to an embodiment, in the areas of the outer surface 4 intended for implementing the visualization by projecting light, the outer surface 4 may be planar or non-planar, e.g. curved.

According to an embodiment, the household appliance 1 comprises a door 18 for closing the treatment seat 5 during the execution of the treatment program and the display area 15 may extend at least also on the part of the outer surface 4 formed by the door 18.

According to an embodiment, the treatment seat 5 is exposed directly to the outside of the household appliance 1 and forms at least part of the outer surface 4, and the display area 15 extends at least also on the part of the outer surface 4 formed by the treatment seat 5.

According to an embodiment, the housing 2 of the appliance 1 forms an auxiliary access opening for an accessory (e.g. a detergent drawer, a bag of powder, a filter, a condensation collection drawer) of the one or more treatment devices 7, which can be closed by an auxiliary cover 19 during the execution of the treatment program, and the display area 15 can extend at least also on the part of the outer surface 4 formed by the auxiliary cover 19.

### Detailed description of the video projector 14

According to an embodiment, the household appliance 1 comprises a single video projector 14.

According to a further embodiment, the household appliance 1 comprises a plurality of said video projectors 14 configured to project light onto one same display area 15 and/or onto a plurality of said display areas 15 which are distinct and at a distance or adjacent to each other.

The individual video projectors 14 may be positioned on two opposite or different sides of the display area 15 and project in opposite directions or in different directions, in order to avoid the appearance of shadows when approaching of the user's hand to the display area 15.

In the event of multiple light projections on the same display area, the video projectors 14 are configured and controlled by the electronic control system 10 so that the light wavelengths and/or the lighting frequency are compatible and do not imply destructive interferences of the projected light.

According to an embodiment, the electronic control system 10 or the video projector 14 comprises anti-distortion means configured to calculate and generate a pre-counter-distorted image to be projected, e.g. by means of rectangle-to-trapezium pre-counter-distortion, in the opposite direction with respect to an inclined projection, e.g. from rectangle to trapezium, of the image projected onto the outer surface 4 because of the light cone of the video projector 14 and of the inclination of the projection axis with respect to the outer surface 4 in the display area 15.

The pre-counter-distortion of the image occurs in dependency of the projection cone angle and of the inclination angle of the projection axis of the video projector 14 with respect to the outer surface 4 in the display area 15, so as to compensate the projection distortion. In this manner, it is possible, for example, to obtain a projected image with a rectangular or circular or oval contour, symmetrical with respect to two perpendicular symmetry axes.

According to embodiments, the one or more video projectors 14 may comprise one or more of:
- LCD video projector (liquid crystal display video projector)
- DLP video projector (micro-mirror video projector)
- LCoS video projector (Liquid Crystal on Silicon)
- D-ILA Video projector (Digital Direct Drive - Image Light Amplifier)
- SXRD video projector (Silicon X-tal Reflective Display)
- LP video projector (laser video projector), e.g. monochromatic,
- DLP video projector (Digital Light Processing)

With particular advantage, in order not to interfere with the aesthetic design of the housing 1, the one or more video projectors 14 are configured as micro or pico projectors.

According to an embodiment, the video projector 14 is positioned entirely inside the housing 2 on an inner side 20 of the outer wall 3 and performs the light projection through a window opening 21 formed in the outer wall 3. The window opening 21 may be a through opening or protected by a protective wall 22 which is transparent and/or which can be opened and closed by means of a protective cover 23 and/or by means of a shutter 24. This allows to conceal and protect the video projector 14.

According to an embodiment, the video projector 14 comprises an inner part 25 located entirely inside the housing 2, i.e. on an inner side 20 of the outer wall 3, and an outer part 26 positioned completely outside the housing 2, i.e. on an outer side of the outer wall 3, wherein the volume of the inner part 25 is greater than the volume of the outer part 26. This reduces the visual impact of the video projector on the aesthetic appearance of the household appliance.

According to an embodiment, the video projector 14 is supported in a concealable and movable manner between a rest position inside the housing 2 and a work position, in which the video projector 14 protrudes at least partially outside the housing 2.

According to an embodiment, the position and/or orientation of the video projector 14 are adjustable, e.g. by means of the electronic control system 10.

Similarly, the position of the display area 15, or in other words the position of the display, is adjustable, e.g. by means of the electronic control system 10.

The appliance 1 or the video projector may comprise a sharpness detector and/or a focal length detector, e.g. an optical sensor, and be configured for autofocus in dependency of a sharpness or focal length signal generated by the sharpness or focal length detector.

The control system 10 may also be configured to visualize, by means of the video projector 14, alarms or warnings directly at a component (e.g. door 18, auxiliary door 19, detergent drawer, filter holder) to which the alarm or warning relates, preferably in response to anomaly signals supplied by the anomaly detector 9 or in response to command insertion signals 16 supplied by the command insertion sensor 16, wherein the component or quantity to detect/monitor falls within the scope of detection of such detectors/sensors 9, 16.

The warning or alarm visualization may comprise, for example, one or more of:
- a "component displaced" warning, e.g. door open if the door 19, 19 is not properly closed or detergent drawer extracted if the detergent drawer is not fully inserted,
- a "missing component or substance" or "insert component or substance" warning, e.g. "replace filter" if a filter is missing or needs to be replaced, or "filling detergent" if a level of the treatment substance is below a minimum level.

According to a further embodiment, the user interface 11 or the video projector 14 can comprise an audio interface 51 controlled by the electronic control system 10 to emit sound alerts (e.g. sounds, voice) in addition to the visualization operations of the video projector 14 and, possibly, so as to clarify acoustically the displayed information.

The features described with reference to a video projector 14 apply to at least one, some or all of the video projectors 14 in the case of a plurality of projectors 14.

### Detailed description of the command insertion sensor 16

According to an embodiment, the command insertion sensor 16 comprises a proximity or touch sensor, e.g. capacitive, applied to the outer wall 3 in the display area 15. The touch sensor may comprise a film or a support panel on which an array of conductor(s) of the capacitors is formed, e.g. arranged according to Cartesian coordinates.

According to a further embodiment, the command insertion sensor 16 comprise one or more radar interaction sensors arranged either at or near the display area 15 and configured to recognize the position and movement of the user's hand in the immediate vicinity of the display area 15, e.g. to recognize a plurality of movements of the index finger or of the index finger and thumb of the user's hand, e.g. the so-called slider dial motions, rotary dial motions, zoom motions and pan motions.

According to a further embodiment, the command insertion sensor 16 comprises one or more optical interaction sensors arranged near the display area 15 and configured to recognize the position and movement of the user's hand in the immediate vicinity of the display area 15, e.g. to recognize a plurality of movements of the index finger or of the index finger and thumb of the user's hand, e.g. the so-called slider dial motions, rotary dial motions, zoom motions and pan motions.

The optical interaction sensor may comprise, for example, a video camera and an interpretation software for interpreting the images recorded by the camera.

According to a further embodiment, the command insertion sensors 16 comprise one or more infrared light sources and corresponding optical sensors configured to recognize the position and movement of the user's hand in the immediate vicinity of the display area 15, e.g. to recognize a plurality of movements of the index finger or of the index finger and thumb of the user's hand, e.g. the so-called slider dial motions, rotary dial motions, zoom motions and pan motions.

According to the present invention, the same command insertion sensor 16 is further configured to monitor and optionally verify the position and/or movements (e.g. vibrations) of moving or extractable parts of the houshold appliance 1 (door 18, auxiliary cover 19, detergent drawer) which fall within its field of detection.

According to a further embodiment, the command insertion means 12 may comprise an audio sensor or microphone adapted to detect audio user commands (in particular, voice commands) and to generate a corresponding voice signal. The electronic control system 10:
- processes the voice signal and generates a corresponding user command signal,
- sets the parameters of the treatment program in dependency of the generated user command signal,
- controls the display, by means of the video projector 14, in dependency of the generated user command signal.

The features described with reference to a command insertion sensor 16 apply to at least one, some or all of the command insertion sensors 16 in the case of a plurality of said command insertion sensors.

### Description of processing and interpretation of the user commands

According to an embodiment, the interpretation and association module associates, e.g. by comparison of position, the detected position and optionally the movement of the hand in one or more command input fields 17 visualized by means of the video projector 14 in the display area 15, and generates the user command signal in dependency of such association.

According to a further embodiment, the interpretation and association module interprets detected single positioning (touches) of the hand or finger associated with individual visualized command input fields 17 as parameter selection movements, e.g. from a plurality of different treatment parameters, and generates the user command signal in dependency of such interpretation.

According to a further embodiment, the interpretation and association module interprets detected continual movement (sliding) of the hand or finger associated with individual visualized command input fields 17 as parameter value adjustment movements (slider dial motions) and generates the user command signal in dependency of such interpretation.

According to a yet further embodiment, the interpretation and association module interprets detected continual and relative movements (relative sliding) of multiple detected fingers but not necessarily associated with given command input fields 17 as visualization adjustment and/or selection movements and generates the user command signal in dependency of such interpretation.

Examples of movements and adjustment and/or visualization selection commands include zooming, panning, scrolling between multiple different screens, moving in the entire display area 15, enlarging/reducing the entire display area 15.

According to an embodiment, the steps of interpreting the movements of the user's fingers may comprise steps of comparing characteristic parameters of the corresponding position and/or hand movement signals with reference parameters indicative of a plurality of predefined movements.

According to a further embodiment, the steps of interpreting the movements of the user's fingers may comprise steps of calculating vector paths performed by the fingers.

The electronic control system 10 performs, by means of the video projector 14, a confirmation visualization of a user's command signal generated as a function of the aforesaid hand positioning and/or movement.

According to embodiments, confirmation visualization of the user's inputted command may comprise one or more of the following:
- a visualization, possibly highlighted, of an option or of a treatment program parameter to confirm the selection of the option or parameter,
- a variation of the treatment parameter selection menu,
- a visualization of a written alert, e.g. "start of treatment program" or "interruption of treatment program" or "household appliance off",
- a change in the display characteristics.

According to an embodiment, in addition to the recognition of the position of the user's hand or finger on the display area 15 and the association of the hand or finger position with a corresponding visualized command input field 17, the one or more insertion command sensors 16 may also be configured to detect and recognize a plurality of movements of the index finger or of the index finger and thumb of the user's hand, e.g. the so-called slider dial motions, rotary or arc dial motions, as well as zoom in/out motions, video pan motions, the latter not necessarily specifically referred to a visualized command input field 17, but corresponding to the gestures of the touchscreen controls known from the touchscreen tablet computers.

According to embodiments, the command input fields 17 may be visualized as images of one or more buttons, knobs, sliders, scales of values, or simple areas or fields, all possibly identified by a corresponding symbol, which represents e.g. a treatment parameter and/or one or more selectable values of a treatment parameter, and/or navigation command symbols for navigating between different command input menues, and/or edit or customization command symbols, such as zoom and/or brightness and/or language and/or shape of the display area 15 and/or position/displacement of the display area 15.

According to an embodiment, the electronic control system 10 of the household appliance 1 can be connected in a communication network, e.g. via Wi-Fi or using Bluetooth, with an external electronic device 52, e.g. a smart phone or tablet computer, and adapted to be controllable, e.g. configurable or upgradeable, by means of the external electronic device 52.

In this case, the electronic control system 10 can be configured, by means of the video projector 14 and the command insertion sensor 16, to mirror a user interface with a control program present on the external device 52 or on a remote server and accessible by means of the external device 52.

### Detailed description of embodiments of the treatment devices 7

According to embodiments, the treatment devices 7 of the household appliance 1 may comprise one or more of the following:
- a hydraulic filling and emptying system 27 and/or water circulation system to wet the domestic products in the treatment position,
- a ventilation system 28 and/or air circulation for aerating the domestic products in the treatment position,
- a heating system 29 for heating the domestic products and/or for heating the water of the hydraulic system and/or for heating the air in the ventilation system,
- a dehumidification system 30 for drying the household products and/or for dehumidifying the air ventilation system 28 (e.g. by means of condensation),
- a supply system 31 for delivering one or more chemical treatment substances directly on the domestic product and/or in the water in the hydraulic system 27 and/or in the air of the ventilation system 28,
- a movement system 29a or mechanical agitation system to move the domestic product and/or the treatment seat 5, e.g. with the purpose of dehydrating by centrifugal effect or varying exposure of the domestic product to the treatment device 7 or agitation and mixing of the household product,
- a microwave generator 30a for generating microwaves in the treatment position 6,
- a steam generator 31a for generating steam in the treatment position 6,
- a generator (e.g. an induction coil) 32 of a variable electromagnetic field adapted to generate an induced electromotive force (and thus an induction heating) in electrically conductive pots in the treatment position 6,
- a gas burner 33 adapted to heat pots or dishes in the treatment position 6,
- a cooling system 34 and/or freezing system adapted to cool and/or freeze domestic products in the treatment position 6.

### Detailed description of embodiments of the treatment detectors 8

According to embodiments, the treatment detectors 8 may comprise one or more of the following:
- a water pressure sensor 35,
- a water level sensor 36,
- a water temperature sensor 37,
- an air pressure sensor 38,
- a treatment seat temperature sensor 39,
- a water turbidity sensor 40,
- an electric quantity sensor 41 of an electric motor of the movement system 29 and/or mechanical agitation system,
- a presence sensor 42 of domestic products in the treatment position 6,
- a level sensor 43 or a presence sensor of a treatment chemical substance in the treatment substance delivery system,
- a position sensor 44 of movable parts of the appliance 1 (e.g. door 18, auxiliary door 19, detergent drawer 45, filter 46, filter holder 47, dust bag 48),
- a flame presence sensor 49,
- a camera 50 connected to or in the housing 2 and directed towards the treatment position 6 for monitoring the domestic product during the treatment.

According to an embodiment, the video projector 14 may visualize images detected by the video camera 50.

### Detailed description of embodiments of the anomaly detectors 9

According to embodiments, the anomaly detectors 9 are also in signal connection with the electronic control system 10 and may comprise one or more temperature sensors, water presence sensors, smoke presence sensors, water absence sensors, position/presence sensors of movable or detachable parts of the household appliance (e.g. door 18, auxiliary door 19, detergent drawer 45, filter 46, the filter holder 47, dust bag 48).

According to embodiments, the electronic control system 10 controls one or more treatment devices 7 and/or controls the display means 13 also in dependency of the anomaly signals generated by anomaly detectors 9.

### Detailed description of preferred embodiments of the household appliance 1

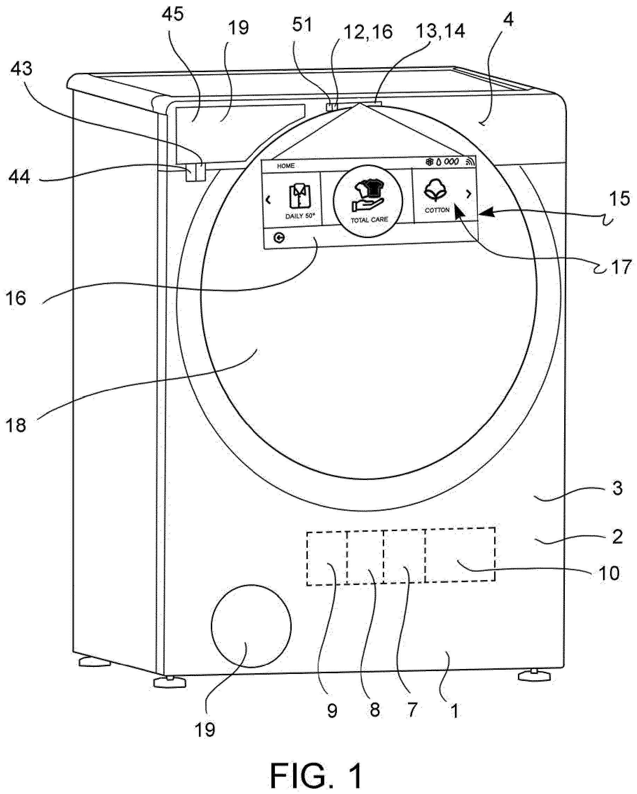

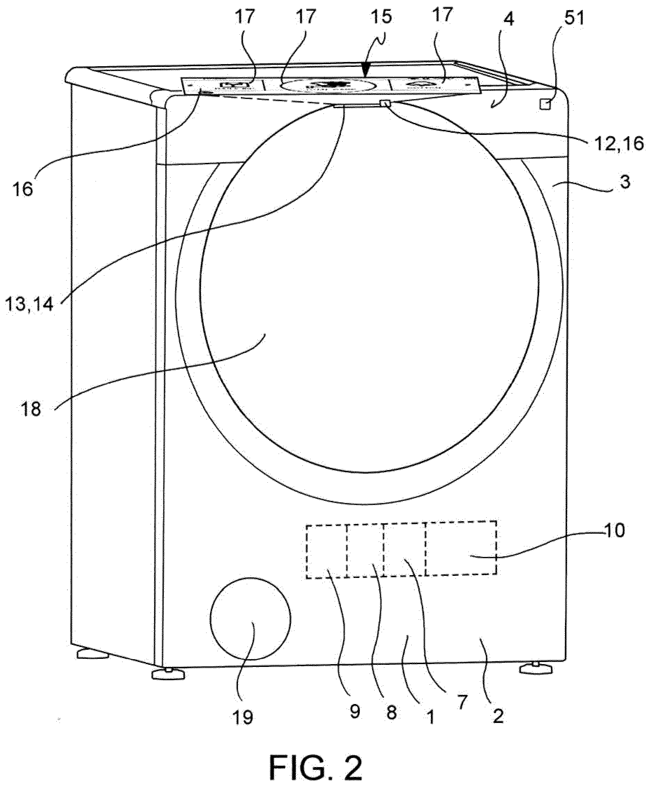

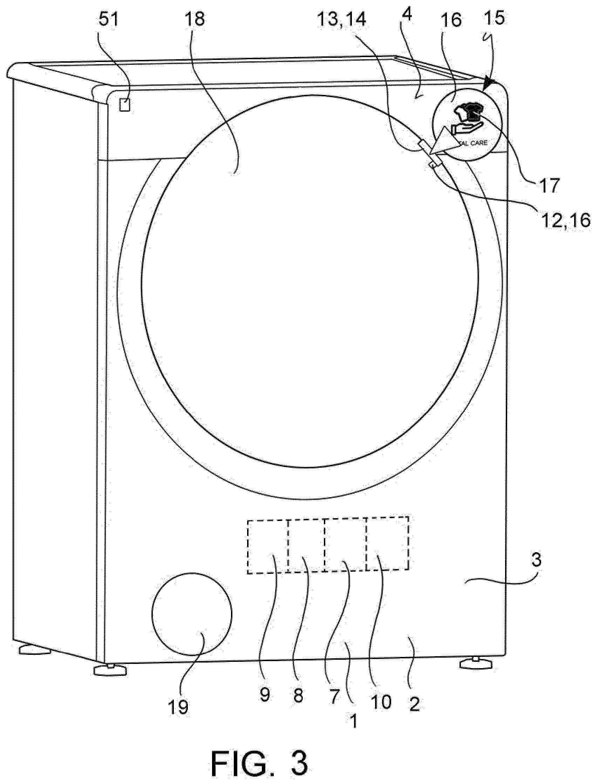

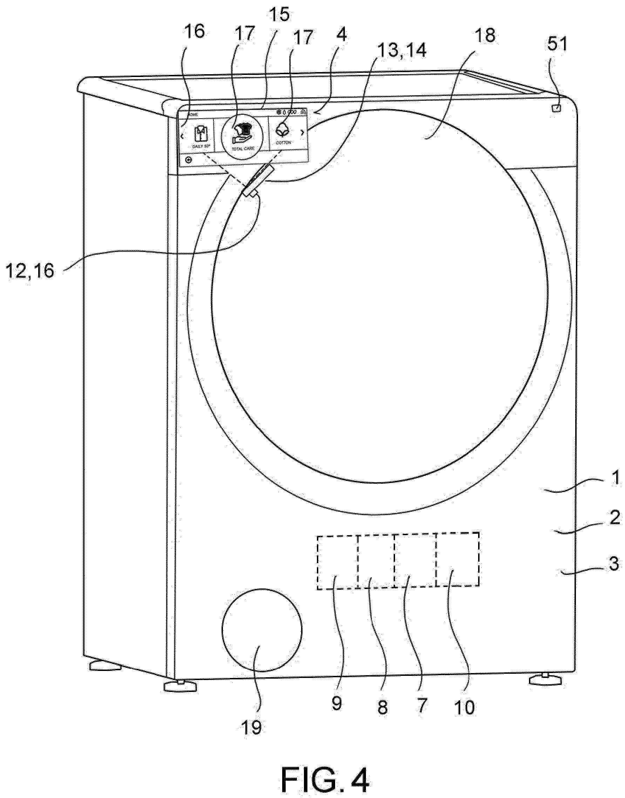

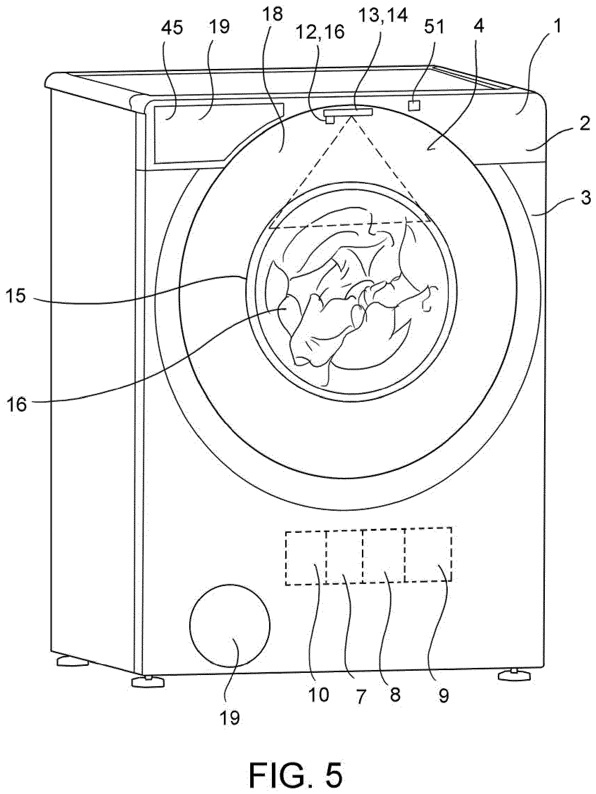

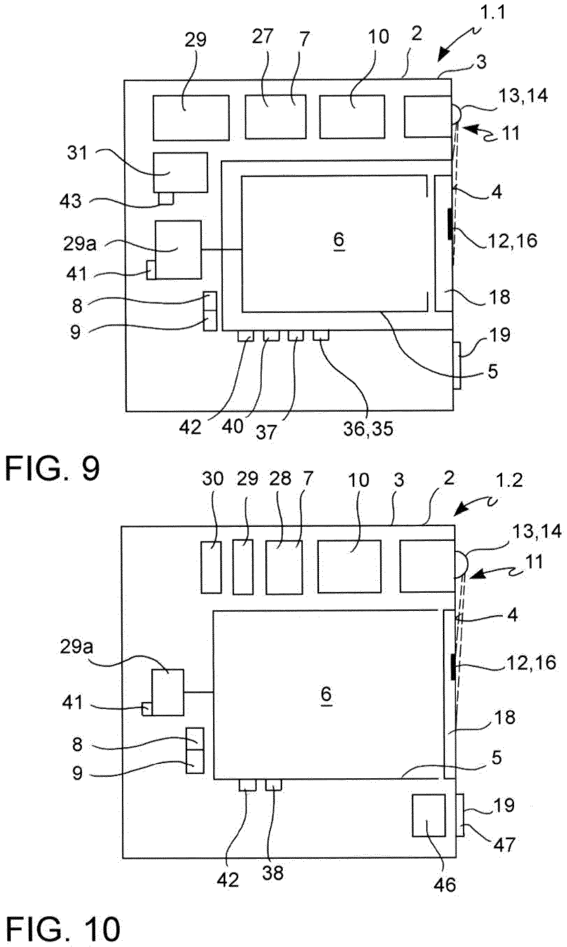

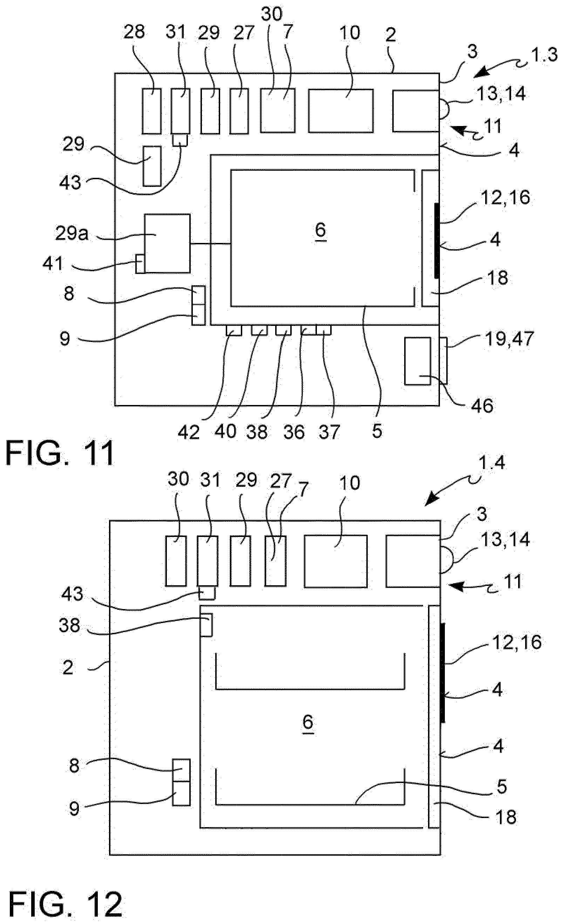

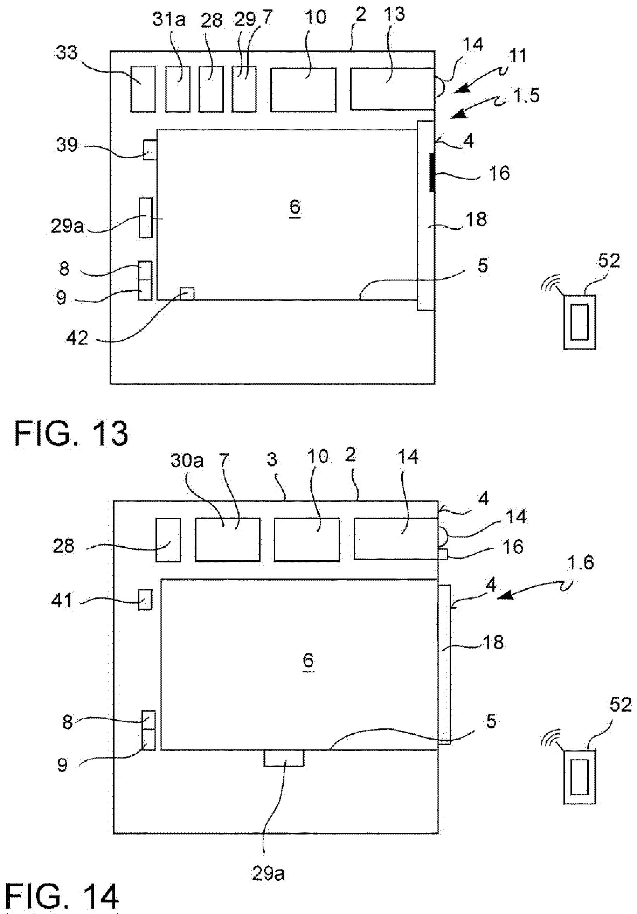

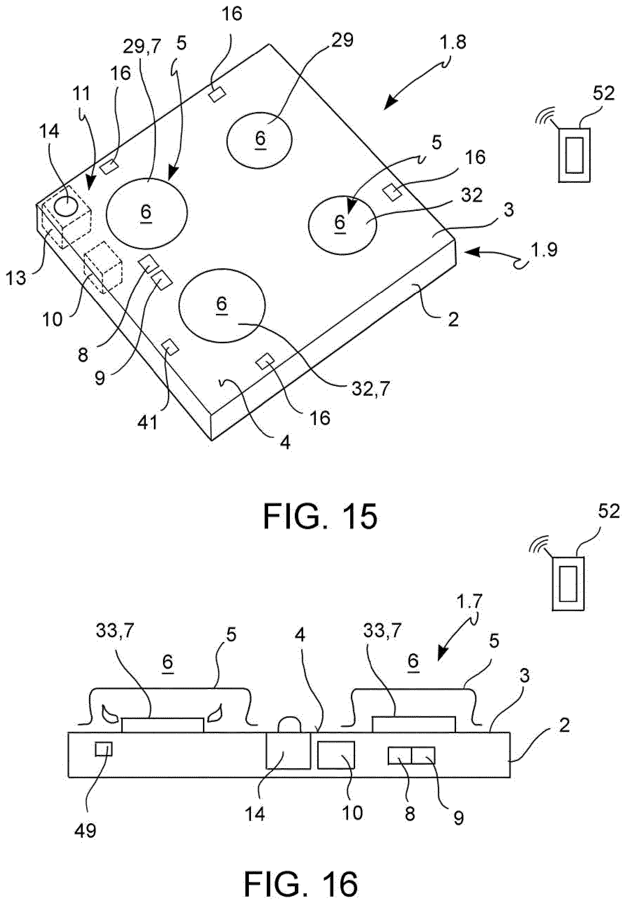

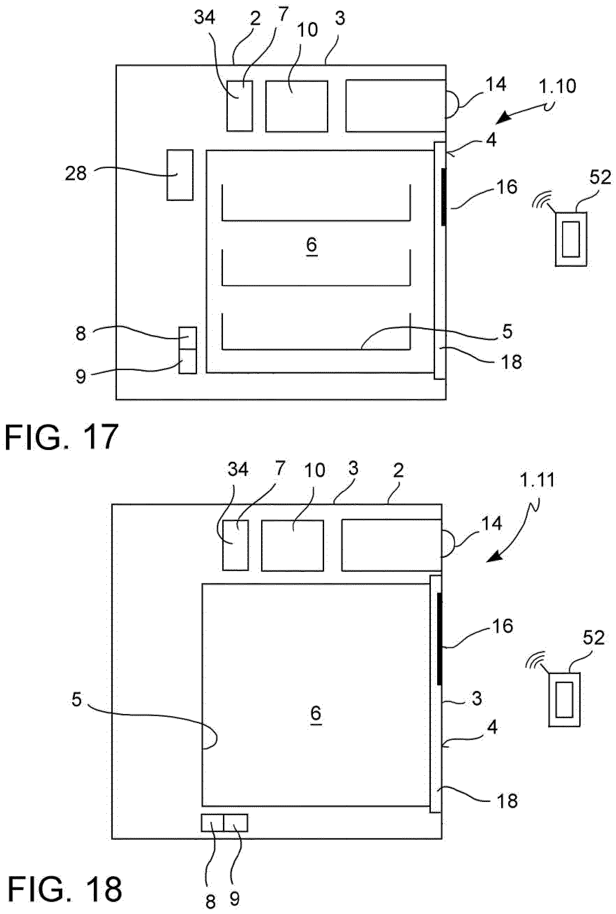

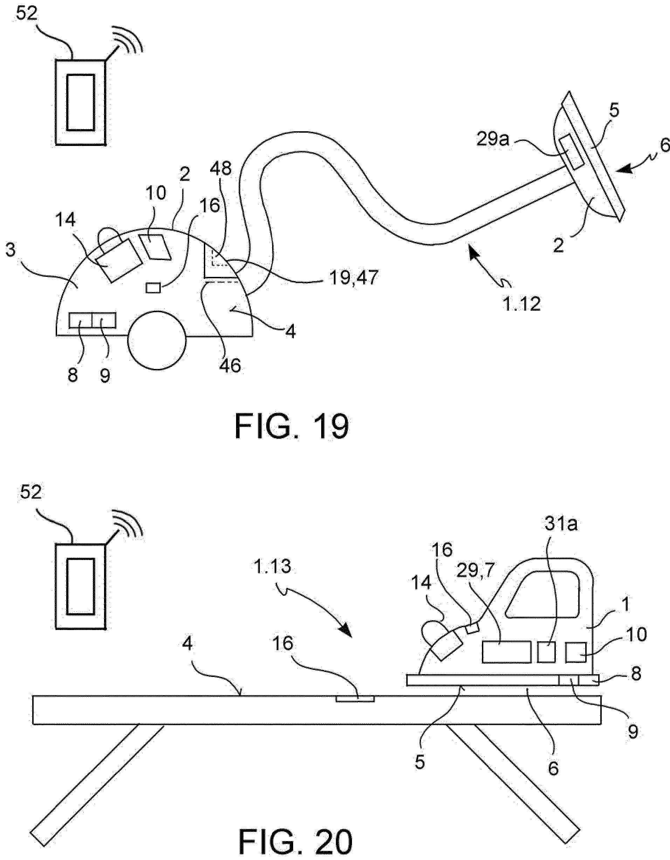

The household appliance 1 is, for example, either:
- a washing machine 1.1 **(****figures 1-5****,** **9**, **11**),
- a tumble dryer 1.2 **(****figure 10****),**
- a clothes washing and drying machine 1.3 **(****figure 11****),**
- a dishwasher 1.4 **(****figure 12****),**
- a domestic cooking oven 1.5 **(****figure 13****),**
- a microwave oven 1.6 **(****figure 14****),**
- a gas cook top 1.7 **(****figure 16****)** and/or a resistive cook top 1.8 **(****figure 15****),** and/or an inductive cook top 1.9 **(****figure 15****),**
- a refrigerator 1.10 **(****figure 17****),**
- a freezer 1.10 **(****figure 18****),**
- a vacuum cleaner 1.11 **(****figure 19****),**
- an ironing apparatus 1.12 **(****figure 20****).**

According to embodiments, the household products which are treated by means of the household appliance 1 may comprise one or more of either:
- linen to be washed and/or dried and/or ironed,
- dishes to be washed,
- food products to be heated and/or cooked and/or defrosted and/or frozen and/or cooled,
- furniture surfaces to be dusted and/or washed,
- fabrics to be ironed or sewn.

The washing machine 1.1 (figure 1-5, 9, 11) comprises a laundry basket or drum which forms the treatment seat 5 and which can be closed by means of a door 18, as well as a hydraulic system 27, a water heating system 29, a dispensing system 31 and a moving system 29a.

The tumble dryer 1.2 **(****figure 10****)** comprises a laundry basket or drum which forms the treatment seat 5 and which can be closed by a door 18, as well as a ventilation system 28, an air heating system 29, a dehumidification system 30 and an actuating/moving system 29a.

The washing and drying machine 1.3 **(****figure 11****)** comprises a laundry basket or drum which forms the treatment seat 5 and which can be closed by a door 18, as well as a hydraulic system 27, a water heating system 29, a dispensing system 31, movement system 29a, a ventilation system 28, an air heating system 29 and a dehumidification system 30.

The dishwasher 1.4 **(****figure 12****)** comprises a housing cavity which forms the treatment seat 5 and which can be closed by a door 18, as well as a hydraulic system 27, a water heating system 29, a dispensing system 31 and, optionally, a dehumidification system 30.

The domestic cooking oven 1.5 **(****figure 13****)** comprises a cooking cavity which forms the treatment seat 5 and which can be closed by a door 18, as well as a ventilation system 28, a heating system 29 for heating the food products, optionally a movement system 29a (e.g. for turning grilled meat), optionally a steam generator 31a for generating steam in the treatment position 6, optionally a gas burner 33 adapted to heat dishes in the treatment position 6.

The microwave oven 1.6 **(****figure 14****)** comprises a cooking cavity which forms the treatment seat 5 and which can be closed by a door 18, as well as a microwave generator 30a for generating microwaves in the treatment position 6, a movement system 29a and optionally a ventilation system 28.

The resistive cook top 1.8 **(****figure 15****)** comprises a pot supporting structure which forms the treatment seat 5, as well as a resistive heating system 29 for heating pots or dishes in the treatment position 6.

The inductive cook top 1.9 **(****figure 15****)** comprises a pot supporting structure which forms the treatment seat 5, as well as a generator (e.g. induction coil) 32 of a variable electromagnetic field in the treatment position 6.

The gas cook top 1.7 **(****figure 16****)** comprises a pot supporting structure which forms the treatment seat 5, as well as a gas burner 33 adapted to heat pots or dishes in the treatment position 6.

The refrigerator 1.10 **(****figure 17****)** comprises a refrigeration cavity which forms the treatment seat 5 and which can be closed by a door 18, as well as a cooling system 34 and/or freezing system adapted to cool and/or freeze domestic products in the treatment position 6 and, optionally, a ventilation system 28 and/or air circulation system for aerating the domestic products in the treatment position 6.

The freezer 1.11 **(****figure 18****)** comprises a freezing cavity which forms the treatment seat 5 and which can be closed by a door 18, as well as a freezing system 34 adapted to freeze the domestic products in the treatment position 6.

The vacuum cleaner 1.12 **(****figure 19****)** comprises a suction mouth for a furnishing surface which forms the treatment seat 5, as well as a ventilation system 28, in particular a suction system, of air from the furniture surface in the treatment position 6 and, optionally, a movement system 29a or mechanical agitation system to move the treatment seat 5.

The ironing apparatus 1.13 **(****figure 20****)** comprises a heatable plate which forms the treatment seat 5, as well as a heating system 29 for heating the heatable plate and a steam generator 31a for generating steam in the treatment position 6.

Each of the household appliances 1, 1.1 ... 1.12 described in greater detail may selectively comprise one or more treatment detectors 8 and selectively one or more anomaly detectors 9, together with their signal connections to the electronic control system 10, described above and not repeated here for the sake of brevity.

Obviously, those skilled in art may make further changes and variations to the household appliance 1 according to the present invention, the scope of protection of the invention is defined in the following claims.

## Claims

1. A household appliance (1) comprising:
- a housing (2) with an outer wall (3) forming an outer surface (4) of the household appliance (1),
- a treatment seat (5) formed in or on the housing (2) and suitable for receiving or supporting domestic products in a treatment position (6),
- at least one treatment device (7) arranged inside the housing (2) and operable for performing a treatment at the treatment position (6) and subjecting the domestic product to said treatment,
- at least one treatment detector (8) arranged at least partially inside the housing (2) and configured to detect a value of a treatment parameter of the treatment performed by the treatment device (7),
- optionally, at least one anomaly detector (9) arranged at least partially inside the housing (2) and configured to detect a value indicative of an operating anomaly of the household appliance (1),
- an electronic control system (10) arranged in the housing (2) and in signal connection with the treatment device (7) and with the treatment detector (8) and configured to command the treatment device (7) in dependency from a treatment program and in dependency from the value detected by the treatment detector (8),
- a user interface (11) in signal connection with the electronic control system (10), said user interface (11) comprising:
- command insertion means (12) for inserting commands for selecting parameters of the treatment program and for inserting a command for executing the treatment program, and
- display means (13) which perform a visualization of the selectable parameters of the treatment program and a visualization of treatment parameters during the execution of the treatment program,
wherein the display means (13) comprise at least one video projector (14) mounted onto the household appliance (1) at the outer wall (3) and configured to perform the visualization, by means of a process of light projecting onto a display area (15) of the outer surface (4) of the housing (2),
wherein
- the user command insertion means (12) comprises at least one command insertion sensor (16) adapted to detect a positioning of the user's hand at the display area (15), and generate a corresponding hand position signal, wherein the household appliance (1) comprises moving or extractable parts (18, 19, 45-48),
- the electronic control system (10) comprises an interpretation and association module which receives and processes the hand position signal and generates a user command signal,
- in dependency of the user command signal, the electronic control system (10) sets the treatment program parameters and controls the visualization by means of the video projector (14), **characterized in that**
- the same command insertion sensor (16) is further configured to monitor the position and/or movements of moving or extractable parts (18, 19, 45-48) of the household appliance (1) which fall within its field of detection.

2. A household appliance (1) according to any one of the preceding claims, comprising a plurality of said video projectors (14) configured to project light onto one same display area (15) and/or onto a plurality of said different display areas (15).

3. A household appliance (1) according to any one of the preceding claims, comprising a plurality of said video projectors (14) positioned on opposite sides of the display area (15) and which project in different directions in the display area (15).

4. A household appliance (1) according to any one of the preceding claims, comprising anti-distortion means configured to calculate and generate an image to be projected by the video projector (14) pre-counter-distorted in the opposite direction to a successive projection distortion due to the inclination of the central projection axis of the light cone of the video projector (14) with respect to the outer surface (4) in the display area (15), in order to compensate said projection distortion.

5. A household appliance (1) according to any one of the preceding claims, wherein said video projector (14) is chosen from the group consisting of:
- LCD video projector
- DLP video projector
- LCoS video projector
- D-ILA video projector
- SXRD video projector
- Laser video projector
- DLP video projector.

6. A household appliance (1) according to any one of the preceding claims, wherein the video projector (14) is positioned entirely inside the housing (2) on an inner side (20) of the outer wall (3) and performs the light projection through a window opening (21) formed in the outer wall (3).

7. A household appliance (1) according to claim 6, wherein the window opening (21) is protected by means of a transparent or openable and closable protective wall (22, 23, 24).

8. A household appliance (1) according to any one of the preceding claims 1-5, wherein the video projector (14) comprises an inner part (25) positioned entirely inside the housing (2) and an outer part (26) positioned outside the housing (2), wherein the volume of the inner part (25) is greater than the volume of the outer part (26).

9. A household appliance (1) according to any one of the preceding claims, wherein the video projector (14) is supported in a concealable manner and movable between a rest position inside the housing (2) and a work position, wherein the video projector (14) protrudes at least partially outside the housing (2).

10. A household appliance (1) according to any one of the preceding claims, wherein the position of the video projector (14) with respect to the housing (1) is adjustable.

11. A household appliance (1) according to any one of the preceding claims, wherein the position of the display area (15) is adjustable.

12. A household appliance (1) according to any one of the preceding claims, comprising means for automatic focusing of the visualization.

13. A household appliance (1) according to any one of the preceding claims, wherein the control system (10) implements a warning display, by means of the video projector (14), directly at a component (18, 19) of the household appliance (1) to which the warning refers, in dependency of anomaly signals supplied by the anomaly detector (9).

14. A household appliance (1) according to any one of the preceding claims, wherein the user interface (11) comprises an audio interface (51) controlled by the electronic control system (10) for emitting vocal warnings, in addition to the video projector (14) display, and so as to vocally specify the displayed information.

15. A household appliance (1) according to any one of the preceding claims, wherein, in the display area (15), the outer surface (4) is discontinuous or curved.

16. A household appliance (1) according to any one of the preceding claims, comprising:
- a door (18) for closing the treatment seat (5) during the execution of the treatment program, wherein the display area (15) extends at least also on the part of the outer surface (4) formed by the door (18), or
- the treatment seat (5) is exposed directly to the outside of the household appliance (1) and forms at least one part of the outer surface (4), wherein the display area (15) extends at least also on the part of the outer surface (4) formed by the treatment seat (5), or
- the housing (2) forms an auxiliary access opening for an accessory of the treatment device (7), said auxiliary access opening being closable by means of an auxiliary cover (19) and the display area (15) extends at least also on the part of the outer surface (4) formed by the auxiliary cover (19).

## Patentansprüche

1. Haushaltsgerät (1), umfassend:
- ein Gehäuse (2) mit einer Außenwand (3), die eine Außenfläche (4) des Haushaltsgeräts (1) ausbildet,
- einen Behandlungssitz (5), der in dem oder an dem Gehäuse (2) ausgebildet ist und der geeignet ist, Haushaltsprodukte in einer Behandlungsposition (6) aufzunehmen oder zu tragen,
- mindestens eine Behandlungsvorrichtung (7), die innerhalb des Gehäuses (2) angeordnet ist und die betrieben werden kann, um eine Behandlung an der Behandlungsposition (6) durchzuführen und das Haushaltsprodukt dieser Behandlung zu unterziehen,
- mindestens einen Behandlungsdetektor (8), der mindestens teilweise innerhalb des Gehäuses (2) angeordnet ist und der dazu konfiguriert ist, einen Wert eines Behandlungsparameters der Behandlung, die von der Behandlungsvorrichtung (7) durchgeführt wird zu erkennen,
- optional mindestens einen Anomalie-Detektor (9), der mindestens teilweise innerhalb des Gehäuses (2) angeordnet ist und der dazu konfiguriert ist, einen Wert zu erkennen, der eine Betriebsanomalie des Haushaltsgeräts (1) angibt,
- ein elektronisches Steuersystem (10), das in dem Gehäuse (2) angeordnet ist und in Signalverbindung mit der Behandlungsvorrichtung (7) und dem Behandlungsdetektor (8) steht und dazu das konfiguriert ist, die Behandlungsvorrichtung (7) in Abhängigkeit von einem Behandlungsprogramm und in Abhängigkeit von dem Wert, der von dem Behandlungsdetektor (8) erkannt wird, zu aktivieren,
- eine Nutzereingabevorrichtung (11), die in Signalverbindung mit dem elektronischen Steuersystem (10) steht, wobei die Nutzereingabevorrichtung (11) umfasst:
- Befehlseingabemittel (12) zum Eingeben von Befehlen zum Auswahlen Parametern des Behandlungsprogramms und zum Eingeben eines Befehls zur Ausführung des Behandlungsprogramms, und
- Anzeigemittel (13), die eine Visualisierung der auswählbaren Parameter des Behandlungsprogramms und eine Visualisierung von Behandlungsparametern während der Ausführung des Behandlungsprogramms durchführen,
wobei die Anzeigemittel (13) mindestens einen Videoprojektor (14) umfassen, der an dem Haushaltsgerät (1) an der Außenwand (3) eingebaut wird und der dazu konfiguriert ist, die Visualisierung durch einen Lichtprojektionsprozess auf einen Anzeigebereich (15) der Außenfläche (4) des Gehäuses (2) auszuführen,
wobei
- die Nutzer-Befehlseingabemittel (12) mindestens einen Befehlseingabesensor (16) umfassen, der eingerichtet ist, eine Positionierung der Hand des Benutzers an dem Anzeigebereichs (15) zu erkennen und ein entsprechendes Handpositionssignal zu erzeugen,
wobei das Haushaltsgerät (1) bewegliche oder herausziehbare Teile (18, 19, 45-48) umfasst,
- das elektronische Steuersystem (10) ein Interpretations- und Zuordnungsmodul umfasst, das das Handpositionssignal empfängt und verarbeitet und ein Nutzerbefehlssignal erzeugt,
- in Abhängigkeit von dem Nutzerbefehlssignal das elektronische Steuersystem (10) die Parameter des Behandlungsprogramms einstellt und die Visualisierung mittels des Videoprojektors (14) steuert, **dadurch gekennzeichnet, dass**
- derselbe Befehlseingabesensor (16) ferner dazu konfiguriert ist, die Position und/oder Bewegungen der beweglichen oder herausziehbaren Teile (18, 19, 45-48) des Haushaltsgeräts (1) zu überwachen, die in sein Erkennungsfeld fallen.

2. Haushaltsgerät (1) nach einem der vorhergehenden Ansprüche, umfassend eine Mehrzahl von Videoprojektoren (14), die dazu konfiguriert sind, Licht auf denselben Anzeigebereich (15) und/oder auf eine Mehrzahl unterschiedlicher Anzeigebereiche (15) zu projizieren.

3. Haushaltsgerät (1) nach einem der vorhergehenden Ansprüche, umfassend eine Mehrzahl von Videoprojektoren (14), die an gegenüberliegenden Seiten des Anzeigebereichs (15) angeordnet sind und in unterschiedliche Richtungen in den Anzeigebereich (15) projizieren.

4. Haushaltsgerät (1) nach einem der vorhergehenden Ansprüche, umfassend Verzerrungsunterdrückungsmittel, die dazu konfiguriert sind, ein Bild zu berechnen und zu erzeugen, das durch den Videoprojektor (14) in der entgegengesetzten Richtung zu einer späteren Projektionsverzerrung vorverzerrt wird, wobei die spätere Projektionsverzerrung durch die Neigung der zentralen Projektionsachse des Lichtkegels des Videoprojektors (14) gegenüber der Außenfläche (4) in dem Anzeigebereich (15) verursacht wird, um die Projektionsverzerrung zu kompensieren.

5. Haushaltsgerät (1) nach einem der vorhergehenden Ansprüche, wobei der Videoprojektor (14) aus der Gruppe bestehend aus:
- LCD-Videoprojektor
- DLP-Videoprojektor
- LCoS-Videoprojektor
- D-ILA-Videoprojektor
- SXRD-Videoprojektor
- Laser-Videoprojektor
- DLP-Videoprojektor
ausgewählt wird.

6. Haushaltsgerät (1) nach einem der vorhergehenden Ansprüche, wobei der Videoprojektor (14) vollständig innerhalb des Gehäuses (2) an einer Innenseite (20) der Außenwand (3) positioniert ist und die Lichtprojektion durch eine Fensteröffnung (21) in der Außenwand (3) ausführt.

7. Haushaltsgerät (1) nach Anspruch 6, wobei die Fensteröffnung (21) durch eine transparente oder öffenbare und schließbare Schutzwand (22, 23, 24) geschützt wird.

8. Haushaltsgerät (1) nach einem der Ansprüche 1-5,
wobei
der Videoprojektor (14) einen Innenteil (25) umfasst, der vollständig innerhalb des Gehäuses (2) positioniert ist, und einen Außenteil (26), der außerhalb des Gehäuses (2) positioniert ist, wobei das Volumen des Innenteils (25) größer als das Volumen des Außenteils (26) ist.

9. Haushaltsgerät (1) nach einem der vorhergehenden Ansprüche, wobei der Videoprojektor (14) verdeckbar getragen wird und zwischen einer Ruhestellung innerhalb des Gehäuses (2) und einer Arbeitsstellung, in der der Videoprojektor (14) mindestens teilweise außerhalb des Gehäuses (2) vorsteht, beweglich ist.

10. Haushaltsgerät (1) nach einem der vorhergehenden Ansprüche, wobei die Position des Videoprojektors (14) in Bezug auf das Gehäuse (1) einstellbar ist.

11. Haushaltsgerät (1) nach einem der vorhergehenden Ansprüche, wobei die Position des Anzeigebereichs (15) einstellbar ist.

12. Haushaltsgerät (1) nach einem der vorhergehenden Ansprüche, umfassend Mittel zur automatischen Fokussierung der Visualisierung.

13. Haushaltsgerät (1) nach einem der vorhergehenden Ansprüche, wobei das Steuersystem (10) eine Warnanzeige, mittels des Videoprojektors (14), direkt an einem Bauteil (18, 19) des Haushaltsgeräts (1), auf das sich die Warnung bezieht, in Abhängigkeit von Anomaliesignalen des Anomaliedetektor (9) implementiert.

14. Haushaltsgerät (1) nach einem der vorhergehenden Ansprüche, wobei die Nutzereingabevorrichtung (11) eine Audio-Eingabevorrichtung (51) umfasst, die von dem elektronischen Steuersystem (10) gesteuert wird, um Sprachwarnungen zusätzlich zu der Videoprojektor (14)-Anzeige auszugeben, und um die angezeigten Informationen sprachlich zu spezifizieren.

15. Haushaltsgerät (1) nach einem der vorhergehenden Ansprüche, wobei die Außenfläche (4) in dem Anzeigebereich (15) unregelmäßig oder gekrümmt ist.

16. Haushaltsgerät (1) nach einem der vorhergehenden Ansprüche, umfassend:
- eine Tür (18) zum Verschließen des Behandlungssitzes (5) während der Ausführung des Behandlungsprogramms, wobei der Anzeigebereich (15) sich mindestens auch auf dem Teil der Außenfläche (4) erstreckt, der von der Tür (18) ausgebildet wird, oder
- der Behandlungssitz (5) direkt nach außen des Haushaltsgeräts (1) ausgesetzt wird und bildet mindestens einen Teil der Außenfläche (4) aus, wobei sich der Anzeigebereich (15) mindestens auch auf den Teil der Außenfläche (4) erstreckt, die von dem Behandlungssitz (5) ausgebildet wird, oder
- das Gehäuse (2) eine Hilfszugangsöffnung für ein Zubehör der Behandlungsvorrichtung (7) ausbildet, wobei die Hilfszugangsöffnung durch eine Hilfsabdeckung (19) verschließbar ist und sich der Anzeigebereich (15) mindestens auch auf den Teil der Außenfläche (4) erstreckt, der von der Hilfsabdeckung (19) ausgebildet wird.

## Revendications

1. Un appareil domestique (1) comprenant :
- un boîtier (2) avec une paroi extérieure (3) formant une surface extérieure (4) de l'appareil domestique (1),
- un siège de traitement (5) formé dans ou sur le boîtier (2) et adapté à recevoir ou à supporter des produits domestiques dans une position de traitement (6),
- au moins un dispositif de traitement (7) disposé à l'intérieur du boîtier (2) et apte à effectuer un traitement à la position de traitement (6) et à soumettre le produit domestique audit traitement,
- au moins un détecteur de traitement (8) disposé au moins partiellement à l'intérieur du boîtier (2) et configuré pour détecter une valeur d'un paramètre de traitement du traitement effectué par le dispositif de traitement (7),
- facultativement, au moins un détecteur d'anomalie (9) disposé au moins partiellement à l'intérieur du boîtier (2) et configuré pour détecter une valeur indicative d'une anomalie de fonctionnement de l'appareil domestique (1),
- un système de commande électronique (10) disposé dans le boîtier (2) et en connexion de signal avec le dispositif de traitement (7) et avec le détecteur de traitement (8) et configuré pour commander le dispositif de traitement (7) en fonction d'un programme de traitement et en fonction de la valeur détectée par le détecteur de traitement (8),
- une interface utilisateur (11) en connexion de signal avec le système de commande électronique (10), ladite interface utilisateur (11) comprenant :
- des moyens d'insertion de commandes (12) pour insérer des commandes de sélection des paramètres du programme de traitement et pour insérer une commande d'exécution du programme de traitement, et
- des moyens d'affichage (13) qui effectuent une visualisation des paramètres sélectionnables du programme de traitement et une visualisation des paramètres de traitement pendant l'exécution du programme de traitement,
dans lequel les moyens d'affichage (13) comprennent au moins un vidéoprojecteur (14) monté sur l'appareil domestique (1) au niveau de la paroi extérieure (3) et configuré pour effectuer la visualisation au moyen d'un processus de projection lumineuse sur une zone d'affichage (15) de la surface extérieure (4) du boîtier (2), dans lequel
- les moyens d'insertion de commandes utilisateur (12) comprennent au moins un capteur d'insertion de commande (16) adapté à détecter un positionnement de la main de l'utilisateur au niveau de la zone d'affichage (15) et à générer un signal de position de la main correspondant,
dans lequel l'appareil domestique (1) comprend des parties mobiles ou extractibles (18, 19, 45-48),
- le système de commande électronique (10) comprend un module d'interprétation et d'association qui reçoit et traite le signal de position de la main et génère un signal de commande utilisateur,
- en fonction du signal de commande utilisateur, le système de commande électronique (10) définit les paramètres du programme de traitement et commande la visualisation au moyen du vidéoprojecteur (14), **caractérisé en ce que** le même capteur d'insertion de commande (16) est en outre configuré pour surveiller la position et/ou les mouvements des parties mobiles ou extractibles (18, 19, 45-48) de l'appareil domestique (1) qui tombent dans son champ de détection.

2. Un appareil domestique (1) selon l'une quelconque des revendications précédentes, comprenant
une pluralité desdits vidéoprojecteurs (14) configurés pour projeter de la lumière sur une même zone d'affichage (15) et/ou sur une pluralité desdites zones d'affichage (15) différentes.

3. Un appareil domestique (1) selon l'une quelconque des revendications précédentes, comprenant une pluralité desdits vidéoprojecteurs (14) positionnés sur des côtés opposés de la zone d'affichage (15) et qui projettent dans des directions différentes dans la zone d'affichage (15).

4. Un appareil domestique (1) selon l'une quelconque des revendications précédentes, comprenant des moyens anti-distorsion configurés pour calculer et générer une image à projeter par le vidéoprojecteur (14) pré-compensée dans la direction opposée à une distorsion de projection ultérieure due à l'inclinaison de l'axe central de projection du cône lumineux du vidéoprojecteur (14) par rapport à la surface extérieure (4) dans la zone d'affichage (15), afin de compenser ladite distorsion de projection.

5. Un appareil domestique (1) selon l'une quelconque des revendications précédentes, dans lequel ledit vidéoprojecteur (14) est choisi dans le groupe constitué de :
- vidéoprojecteur LCD
- vidéoprojecteur OLP
- vidéoprojecteur LCoS
- vidéoprojecteur D-ILA
- vidéoprojecteur SXRD
- vidéoprojecteur Laser
- vidéoprojecteur OLP.

6. Un appareil domestique (1) selon l'une quelconque des revendications précédentes, dans lequel le vidéoprojecteur (14) est positionné entièrement à l'intérieur du boîtier (2) sur un côté interne (20) de la paroi extérieure (3) et effectue la projection lumineuse à travers une ouverture de fenêtre (21) formée dans la paroi extérieure (3).

7. Un appareil domestique (1) selon la revendication 6, dans lequel l'ouverture de fenêtre (21) est protégée au moyen d'une paroi de protection (22, 23, 24) transparente ou ouvrable et refermable.

8. Un appareil domestique (1) selon l'une quelconque des revendications 1 à 5 précédentes,
dans lequel
le vidéoprojecteur (14) comprend une partie interne (25) positionnée entièrement à l'intérieur du boîtier (2) et une partie externe (26) positionnée à l'extérieur du boîtier (2), la partie interne (25) présentant un volume supérieur à celui de la partie externe (26).

9. Un appareil domestique (1) selon l'une quelconque des revendications précédentes, dans lequel le vidéoprojecteur (14) est supporté de manière escamotable et mobile entre une position de repos à l'intérieur du boîtier (2) et une position de travail, dans laquelle le vidéoprojecteur (14) fait saillie au moins partiellement à l'extérieur du boîtier (2).

10. Un appareil domestique (1) selon l'une quelconque des revendications précédentes, dans lequel la position du vidéoprojecteur (14) par rapport au boîtier (1) est réglable.

11. Un appareil domestique (1) selon l'une quelconque des revendications précédentes, dans lequel la position de la zone d'affichage (15) est réglable.

12. Un appareil domestique (1) selon l'une quelconque des revendications précédentes, comprenant des moyens pour la mise au point automatique de la visualisation.

13. Un appareil domestique (1) selon l'une quelconque des revendications précédentes, dans lequel le système de commande (10) met en œuvre un affichage d'avertissement, au moyen du vidéoprojecteur (14), directement au niveau d'un composant (18, 19) de l'appareil domestique (1) auquel se réfère l'avertissement, en fonction des signaux d'anomalie fournis par le détecteur d'anomalie (9).

14. Un appareil domestique (1) selon l'une quelconque des revendications précédentes, dans lequel l'interface utilisateur (11) comprend une interface audio (51) commandée par le système de commande électronique (10) pour émettre des avertissements vocaux, en plus de l'affichage par le vidéoprojecteur (14), de manière à spécifier vocalement les informations affichées.

15. Un appareil domestique (1) selon l'une quelconque des revendications précédentes, dans lequel, dans la zone d'affichage (15), la surface extérieure (4) est discontinue ou courbe.

16. Un appareil domestique (1) selon l'une quelconque des revendications précédentes, comprenant :
- une porte (18) pour fermer le siège de traitement (5) pendant l'exécution du programme de traitement, dans lequel la zone d'affichage (15) s'étend au moins également sur la partie de la surface extérieure (4) formée par la porte (18), où
- le siège de traitement (5) est exposé directement à l'extérieur de l'appareil domestique (1) et forme au moins une partie de la surface extérieure (4), dans lequel la zone d'affichage (15) s'étend au moins également sur la partie de la surface extérieure (4) formée par le siège de traitement (5), ou
- le boîtier (2) forme une ouverture d'accès auxiliaire pour un accessoire du dispositif de traitement (7), ladite ouverture d'accès auxiliaire étant refermable au moyen d'un couvercle auxiliaire (19) et la zone d'affichage (15) s'étend au moins également sur la partie de la surface extérieure (4) formée par le couvercle auxiliaire (19).
